(19) Europäisches Patentamt
European Patent Office
Office européen des brevets

(11) **EP 1 998 514 B1**

(12) **FASCICULE DE BREVET EUROPEEN**

(45) Date de publication et mention de la délivrance du brevet:
**28.08.2019 Bulletin 2019/35**

(51) Int Cl.:
***H04L 12/46*** *(2006.01)*

(21) Numéro de dépôt: **08156847.9**

(22) Date de dépôt: **23.05.2008**

(54) **Traitement de paquets en vue de communiquer avec une machine à travers un ou plusieurs réseaux secondaires**

Paketverarbeitung zur Kommunikation mit einer Maschine über ein oder mehrere Sekundärnetze

Handling of packets in order to communicate with a machine over one or more secondary networks

(84) Etats contractants désignés:
AT BE BG CH CY CZ DE DK EE ES FI FR GB GR HR HU IE IS IT LI LT LU LV MC MT NL NO PL PT RO SE SI SK TR

(30) Priorité: **29.05.2007 FR 0755316**

(43) Date de publication de la demande:
**03.12.2008 Bulletin 2008/49**

(73) Titulaire: **Transpacific IP Group Limited
Grand Cayman KY1-1001 (KY)**

(72) Inventeurs:
• **Kiessling, Lars
92320, CHATILLON (FR)**
• **Amour, Françoise
PARIS, 75005 (FR)**
• **Baranco, Jocelyn
92130, ISSY LES MOULINEAUX (FR)**

(74) Mandataire: **Eidelsberg, Olivier Nathan et al
Cabinet Flechner
22, avenue de Friedland
75008 Paris (FR)**

(56) Documents cités:
WO-A-2006/108168 WO-A-2006/125044
US-B1- 6 741 585 US-B1- 7 215 667

**Description**

L'invention concerne le domaine des télécommunications et plus particulièrement un procédé de communication avec une machine à travers un réseau de télécommunication.

Dans le domaine des communications de machine à machine, dénommé en abrégé M2M, les machines sont souvent accessibles à partir d'un réseau principal par l'intermédiaire d'une passerelle de communication entre ce réseau principal et un réseau secondaire ou réseau capillaire. Selon la complexité du réseau, il est parfois nécessaire de traverser plusieurs réseaux secondaires afin de pouvoir communiquer avec une machine.

Une machine, appartenant à un réseau secondaire, est adressable et identifiable de manière unique à partir d'un dispositif gérant ce réseau secondaire. Cependant une telle machine n'est pas forcément adressable à partir d'un autre réseau ou d'un autre réseau secondaire, soit parce que la technologie d'adressage d'une machine varie d'un réseau secondaire à un autre, soit parce que l'identifiant utilisé pour identifier la machine dans son réseau secondaire de raccordement est utilisé pour une autre machine dans un autre réseau secondaire.

Au vu de l'état de la technique, les inventeurs ont ainsi constaté un besoin pour un mécanisme générique de communication avec des machines qui soit applicable quel que soit le nombre de niveaux de sous-réseaux présents et quel que soit les technologies d'adressage utilisées dans ces différents sous-réseaux.

Un des buts de l'invention est de remédier à des insuffisances et inconvénients de l'état de la technique et/ou d'y apporter des améliorations.

Les documents US7215667 et US6741585 décrivent des solutions de transmission et de traitement de paquets.

L'invention a pour objet, selon un premier aspect, un procédé de traitement de paquet de données selon la revendication 1 (décodage), respectivement selon la revendication 5 (codage).

L'invention repose sur la mise en place, au niveau d'une entité réceptrice / émettrice, sous forme par exemple de plateforme de communication, de moyens d'identification de fonctions de codage, respectivement de décodage, en association avec les différents dispositifs d'interconnexion entre réseaux via lesquels transitent les paquets qui sont émis par ou à destination d'une machine raccordée à l'un de ces réseaux, ces fonctions de codage et de décodage correspondant respectivement à des fonctions de décodage et de codage mises en oeuvre respectivement dans les différents dispositifs lors de la transmission d'un paquet.

L'invention permet de prendre en compte les différentes opérations de traitement effectuées par un ou plusieurs dispositifs d'interconnexion lors du transit de paquets, et ce de manière centralisée. Cela signifie en particulier que la communication avec les machines qui sont raccordées aux différents réseaux secondaires accessibles via ces dispositifs d'interconnexion, ne nécessite ni la modification des dispositifs d'interconnexion ni celle des machines terminales. La prise en compte s'effectue de manière centralisée au niveau de la plateforme de communication formant entité réceptrice / émettrice, celle-ci étant dotée des fonctions correspondant à celles mises en oeuvres dans le ou les dispositifs d'interconnexion intervenant dans la transmission du paquet.

Selon un mode de réalisation particulier, l'étape de décodage est appliquée itérativement sur le paquet courant constitué par le paquet obtenu à l'issue de l'étape de décodage précédente, par application à chaque itération de la fonction de décodage associée aux données d'identification de chaque dispositif d'une succession de dispositifs intervenus dans la transmission dudit paquet de ladite machine à l'entité réceptrice, l'ordre des dispositifs associés respectivement aux fonctions de décodage appliquées lors des étapes de décodage successives étant l'ordre inverse de l'ordre dans lequel ces dispositifs interviennent lors de la transmission dudit paquet de ladite machine à l'entité réceptrice.

La plateforme de communication est ainsi à même, lorsqu'elle reçoit un paquet, de restituer le message brut en provenance d'une machine, quel que soit le nombre de dispositifs d'interconnexion via lesquels ce paquet transite et quelles que soient les opérations de codage/décodage d'adresse ou autres opérations appliquées à ce paquet par ces dispositifs d'interconnexion lors du transit du paquet.

Réciproquement, l'étape de codage est appliquée itérativement sur le paquet courant constitué le paquet obtenu à l'étape de codage précédente, par application à chaque itération de la fonction de codage associée aux données d'identification de chaque dispositif d'une succession de dispositifs destinés à intervenir dans la transmission dudit paquet de l'entité émettrice à ladite machine, l'ordre des dispositifs respectivement associés aux fonctions de codage appliquées lors des étapes de codage successives étant l'ordre inverse de l'ordre dans lequel ces dispositifs interviennent lors de la transmission dudit paquet de l'entité émettrice à ladite machine.

Ainsi la plateforme de communication est à même, lorsqu'elle désire envoyer un paquet à une machine donnée, de générer un paquet codé de manière adéquate. En effet, quel que soit le nombre de dispositifs via lesquels ce paquet va transiter et quelles que soient les opérations de codage/décodage d'adresse ou autres opérations appliquées à ce paquet par ces dispositifs lors du transit du paquet, le paquet parvient à la machine destinataire en étant codé de manière adéquate, compréhensible par la machine destinataire sans qu'il soit nécessaire de modifier cette machine.

Corrélativement l'invention a pour objet un dispositif de communication selon la revendication 9, respectivement selon la revendication 10.

Les avantages énoncés pour le procédé selon l'invention sont transposables directement au dispositif selon l'invention.

D'autres buts, caractéristiques et avantages de l'invention apparaîtront à travers la description qui va suivre, donnée uniquement à titre d'exemple non limitatif, et faite par référence aux dessins annexés dans lesquels:

- les figures 1 à 4 représentent de manière schématique différentes configurations de réseaux auxquelles est applicable le procédé selon l'invention;
- la figure 5 est un organigramme d'un procédé selon l'invention, en ce qui concerne la partie réception de paquets de données en provenance d'une machine;
- la figure 6 est un organigramme d'un procédé selon l'invention, en ce qui concerne la partie envoi de paquets de données à destination d'une machine;
- la figure 7a représente de manière schématique différents états d'un premier exemple de paquet de données au cours de sa transmission entre une machine et une plateforme,
- la figure 7b représente de manière schématique différents états d'un deuxième exemple de paquet de données au cours de sa transmission entre une machine de type passerelle et une plateforme.

L'invention repose sur la mise en place, au niveau d'une plateforme de communication, de moyens d'exécution de fonctions de codage et de décodage telles que mises en oeuvres dans les différents dispositifs d'interconnexion entre réseaux via lesquels transitent les paquets émis ou à destination d'une machine raccordée à l'un de ces réseaux. Elle est applicable que ces machines soient directement accessibles par la plateforme ou via une passerelle, et indépendamment de la technologie d'adressage utilisée dans le réseau secondaire.

L'ordre dans lequel ces fonctions sont exécutées au niveau de la plateforme reflète le chemin suivi par le paquet lors de sa transmission à travers le réseau de transmission de données constitué par l'ensemble des différents réseaux raccordés les uns aux autres.

L'information relative aux chemins empruntés par les paquets est en outre déductible directement des paquets reçus par la plate-forme et peut donc être reconstituée par cette plateforme à partir des paquets reçus.

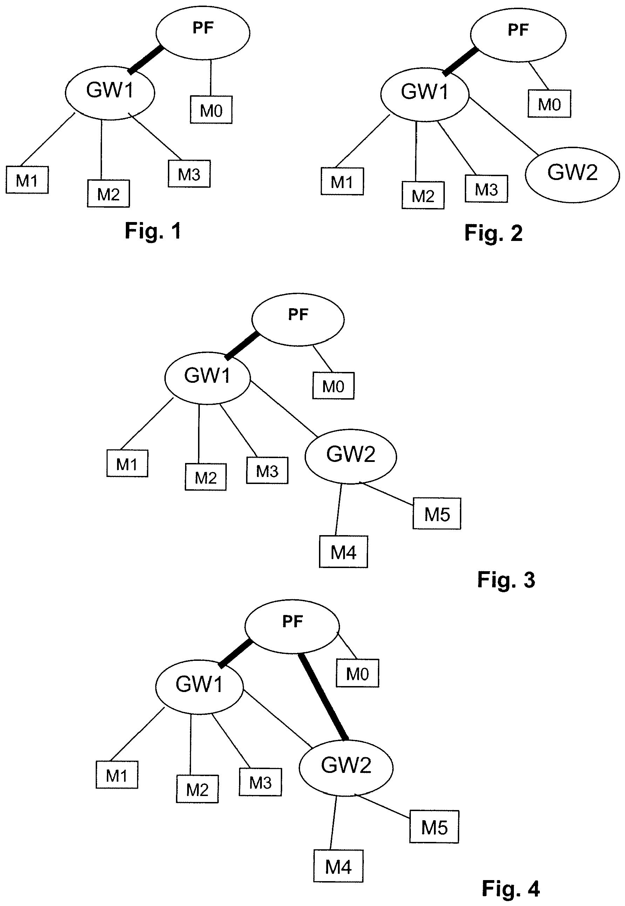

Les figures 1 à 4 représentent de manière schématique différentes configurations de réseaux auxquelles est applicable le procédé selon l'invention. Dans ces différentes figures, les mêmes références sont utilisées pour des éléments identiques:

- M0, M1, M2, M3, M4, M5 désignent des machines: il peut s'agir de tout type de machine ou équipement communicant apte à être raccordée à un réseau de transmission de données, par exemple un capteur, un actionneur, un distributeur automatique, un compteur électrique, etc;
- PF désigne une plateforme de communication conçue pour communiquer avec l'une quelconque des machines M0 à M5 et une quelconque des plateformes d'interconnexion GW1 et GW2;
- GW1 et GW2 désignent des plateformes d'interconnexion ou passerelles entre deux réseaux.

Ces deux plateformes GW1 et GW2 sont elles-mêmes considérées comme des machines dans le cadre de l'invention. En effet, une telle plateforme est susceptible d'émettre et/ou de recevoir des paquets pour son propre compte et donc peut être vue par la plateforme PF comme une machine destinatrice et/ou émettrice de paquets.

Dans le cas de la configuration de la figure 1, la plate-forme PF est raccordée à une passerelle GW1, gérant un réseau secondaire auquel sont raccordées les machines M1 à M3. Une machine M0 est directement raccordée à la plate-forme PF.

La configuration de la figure 2 est identique à celle de la figure 1, à ceci près qu'une deuxième passerelle GW2 est en outre raccordée à la première passerelle GW1.

La configuration de la figure 3 est identique à celle de la figure 2, à ceci près que deux machines M4 et M5 sont en outre raccordées à la passerelle GW2.

La configuration de la figure 4 est identique à celle de la figure 3, à ceci près que la passerelle GW2 est raccordée à la fois à la passerelle GW1 et à la plate-forme PF.

Dans ces différentes configurations, le réseau géré par la plate-forme PF correspond à l'ensemble comprenant la passerelle GW1 et la machine M0. Le réseau géré par la passerelle GW1 correspond à l'ensemble comprenant les machines M1 à M3 et la passerelle GW2. Le réseau géré par la passerelle GW2 correspond à l'ensemble comprenant les machines M4 et M5.

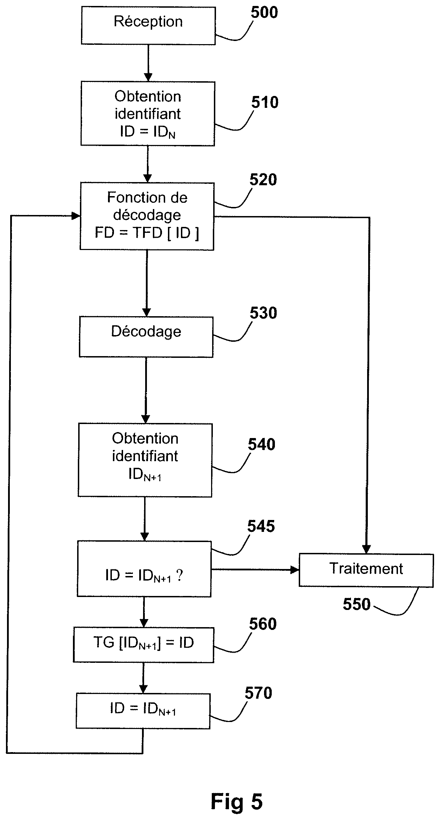

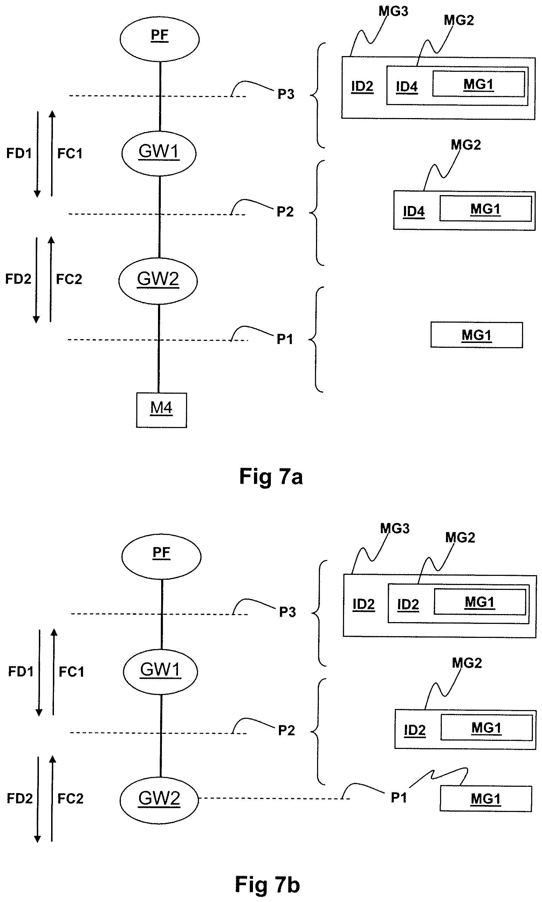

Le procédé selon l'invention, en ce qui concerne la partie réception de paquets, est décrit plus en détail au regard de la figure 5, dans le cas de la configuration de réseau de la figure 4 et en utilisant l'exemple de paquets de données illustré à la figure 7a.

Dans cet exemple, un paquet de données P est émis par la machine M4 à destination de la plateforme PF. Comme illustré à la figure 7a, le paquet transite successivement à travers la passerelle GW2 puis à travers la passerelle GW1. Le paquet de donné P a des contenus différents P1, P2, P3 au cours de sa transmission de la machine M4 à plate-forme PF.

Après émission par la machine M4 et à réception par la passerelle GW2, le paquet P a un contenu P1. Pour simplifier l'exposé, le paquet P de contenu P1 est également nommé de manière raccourcie "paquet P1". Le paquet P1 comprend notamment un message MG1 destiné à être transmis à la plateforme PF.

Le paquet P1 comprend optionnellement une identification de la plateforme destinataire PF. Selon le protocole de transmission de données utilisé entre la machine M4 et la passerelle GW2, cette identification peut être transmise, non pas avec ou dans le paquet P1, mais lors d'un dialogue conforme à ce protocole entre la machine M4 et la passerelle GW2, par exemple lors de la connexion de la machine M4 à la passerelle.

Le paquet P1 comprend optionnellement, des données d'identification de la machine M4. Selon la technologie d'adressage utilisée par la passerelle GW2 et selon le protocole de transmission de données utilisé entre la machine M4 et la passerelle GW2, ces données d'identification sont transmises, non pas avec ou dans le paquet P1, mais lors d'un dialogue entre la machine M4 et la passerelle GW2.

Après émission par la passerelle GW2 et à réception par la passerelle GW1, le paquet P a un contenu P2. Pour simplifier l'exposé, le paquet P de contenu P2 est également nommé de manière raccourcie "paquet P2". Le paquet P2 comprend le message MG1 destiné à être transmis à la plateforme PF. Optionnellement, selon le protocole de transmission de données utilisé, le paquet P2 comprend une identification de la plateforme destinataire et/ou des données d'identification de la passerelle GW2 émettrice du paquet P2.

Le paquet P2 est généré à partir du paquet P1 tel que reçu par la passerelle GW2, par application d'une fonction FC2 de codage associée à la passerelle GW2. La fonction de codage associée à la passerelle GW2 est appliquée par la passerelle GW2 à tout paquet en provenance du réseau secondaire (auquel appartiennent les machines M4 et M5) géré par cette passerelle. La fonction FC2 de codage consiste notamment à encapsuler le message MG1 du paquet P1 dans un message MG2 et à insérer dans le message MG2 des données d'identification ID4 de la machine M4 émettrice du paquet P1. La fonction FC2 de codage peut en outre consister à modifier le format de tout ou partie des données du paquet P1 ou à appliquer tout autre traitement sur tout ou partie des données du paquet P1.

Après émission par la passerelle GW1 et à réception par la plateforme PF, le paquet P a un contenu P3. Pour simplifier l'exposé, le paquet P de contenu P3 est également nommé de manière raccourcie "paquet P3". Le paquet P3 comprend le message MG1 destiné à être transmis à la plateforme PF. Optionnellement, selon le protocole de transmission de données utilisé, le paquet P3 comprend en outre une identification de la plateforme destinataire et/ou des données d'identification ID1 de la passerelle GW1 émettrice du paquet P3.

Le paquet P3 est généré à partir du paquet P2 tel que reçu par la passerelle GW1, par application d'une fonction FC1 de codage associée à la passerelle GW1. La fonction FC1 de codage associée à la passerelle GW1 est appliquée par la passerelle GW1 à tout paquet en provenance du réseau secondaire (auquel appartiennent les machines M1, M2, M3 et la passerelle GW2) géré par cette passerelle. La fonction de codage FC1 consiste notamment à encapsuler le message MG2 du paquet P2 dans un message MG3 et à insérer dans le message MG3 des données d'identification ID2 de la machine GW2 émettrice du paquet P2. La fonction FC1 de codage peut en outre consister à modifier le format de tout ou partie des données du paquet P2 ou à appliquer tout autre traitement sur tout ou partie des données du paquet P2.

Lorsque le paquet P est émis par la plate-forme PF à destination de la machine M4, le paquet P subit, lors de son passage à travers les passerelles GW1 puis GW2, les transformations inverses de celle décrites dans le cas de sa transmission de la machine M4 vers la plate-forme PF. En particulier, le paquet P prend successivement les contenus P3, puis P2, puis P1, avec la seule différence que le contenu du message MG1 destiné à la machine M4 est dans ce cas généré par la plate-forme PF.

Ainsi à réception du paquet P3 en provenance de la plate-forme PF, la passerelle GW1 applique une fonction de décodage FD1 associée à la passerelle GW1, fonction qui est une fonction inverse de la fonction de codage FC1 décrite ci-dessus. En d'autres termes, l'application de la fonction de décodage FD1 au paquet P de contenu P3 permet d'obtenir un paquet P de contenu P2.

De même, à réception du paquet P2 en provenance de la passerelle GW1, la passerelle GW2 applique une fonction de décodage FD2 associée à la passerelle GW2, fonction qui est une fonction inverse de la fonction de codage FC2 décrite ci-dessus. En d'autres termes, l'application de la fonction de décodage FD2 au paquet P de contenu P2 permet d'obtenir un paquet P de contenu P1.

A réception par la plate-forme PF du paquet P de contenu P3, émis par la machine M4, le procédé illustré à la figure 5, comprenant les étapes 500 à 570, est exécuté par la plate-forme PF.

A l'étape 500, la plate-forme PF reçoit le paquet P de contenu P3.

A l'étape 510, la plate-forme PF obtient des données d'identification ID1 de l'émetteur du paquet reçu, en l'occurrence des données d'identification de la passerelle GW1. La plate-forme PF enregistre en mémoire ID les données d'identification ID1 :

$$ID = ID1 \, .$$

A l'étape 520, la plate-forme PF recherche un identifiant d'une fonction FD de décodage associée aux données d'identification mémorisées dans la mémoire ID:

$$FD = TFD \, [ \, ID \, ]$$

Cet identifiant a été préalablement stocké en mémoire, dans une première table TFD dite table des fonctions de décodage, en association avec les données d'identification ID mémorisées à l'étape 510, en l'occurrence les données d'identification ID1 de la passerelle GW1. Un tel identifiant est réalisé par exemple sous forme de pointeur vers une fonction logicielle de décodage, pointeur au moyen duquel la fonction est aisément activable.

Si aucun identifiant de fonction de décodage n'est trouvé ou que cet identifiant est un pointeur nul, cela signifie qu'aucune fonction de décodage n'est à exécuter par la plate-forme PF. Ceci se produit notamment dans le cas où la machine est directement raccordée à la plateforme PF, comme c'est le cas par exemple pour la machine M0 de la figure 4. Dans ce cas, l'étape 550 est exécutée suite à l'étape 520. Dans le cas contraire, l'étape 530 est exécutée suite à l'étape 520. Dans l'exemple décrit c'est l'étape 530 qui est exécutée suite à l'étape 520.

A l'étape 530, lorsqu'une fonction exécutable a été identifiée, la plate-forme PF exécute cette fonction et l'applique au paquet reçu. Dans le cas de l'exemple donné à la figure 7a, le paquet P reçu par la plate-forme PF, de contenu P3, est décodé au moyen de la fonction FD de décodage identifiée, fonction qui en l'occurrence est la fonction FD1 de décodage associée à la passerelle GW1, de manière à restituer le contenu P2 du paquet P tel qu'émis par la passerelle GW2.

A l'étape 540, les données d'identification $ID_{N+1}$ qui ont été encapsulées dans le paquet P3 sont extraites suite à l'étape de décodage 530. Ces données correspondent dans l'exemple décrit aux données d'identification ID2 de la machine GW2 émettrice du paquet P2 :

$$ID_{N+1} = ID2.$$

A l'étape 545, les données d'identification $ID_{N+1}$ extraites à l'étape 540, sont comparées avec les données d'identification de l'émetteur du paquet mémorisées dans la mémoire ID. En cas d'égalité, le procédé se poursuit par l'étape 550. Ceci se produit notamment dans le cas où la passerelle GW1 envoie à la plate-forme PF des données, dont elle est l'émetteur (i.e. la passerelle GW1 envoie des données pour son propre compte). Dans le cas contraire, l'étape 560 est exécutée suite à l'étape 545. Dans l'exemple choisi, étant donné que ID = ID1 (données d'identification de passerelle GW1) et que $ID_{N+1}$ = ID2 (données d'identification de passerelle GW2), c'est l'étape 560 qui est exécutée suite à l'étape 545.

A l'étape 560, la plate-forme PF mémorise, dans une deuxième table TG dite table de gestion, en association avec les données d'identification $ID_{N+1}$ = ID2 obtenues à l'étape 540, les données d'identifications ID1 mémorisées dans la mémoire ID :

$$TG [ID_{N+1}] = ID$$

c'est-à-dire :

$$TG [ ID2 ] = ID1 .$$

La table de gestion, ainsi renseignée, est utilisée pour mémoriser le fait qu'une machine fait partie d'un réseau secondaire, géré par et accessible à travers une autre machine de type passerelle. Dans l'exemple choisi, la passerelle GW2 fait partie d'un réseau secondaire accessible via la passerelle GW1.

La table de gestion est ainsi utilisée pour mémoriser, en association avec des données d'identification d'une première machine, des données d'identification d'une deuxième machine via laquelle le réseau secondaire dont fait partie la première machine est accessible.

A l'étape 570, la plateforme PF enregistre en mémoire ID les données d'identification ID2 obtenues à l'étape 540 :

$$ID = ID2 .$$

Suite à la mise à jour de la mémoire ID effectuée à l'étape 570, le procédé se poursuit à l'étape 520. Les étapes 520 à 545 sont itérées à nouveau avec comme paquet P2, en remplacement de P3, et comme données d'identification ID2, en remplacement de ID1.

Dans l'exemple choisi, le déroulement de cette deuxième itération s'effectue comme suit.

A l'étape 520, la plate-forme PF recherche un identifiant d'une fonction FD de décodage associée aux données d'identification mémorisées dans la mémoire ID:

$$FD = TFD [ ID ]$$

A l'étape 530, la plate-forme PF exécute cette fonction et l'applique au paquet P2 reçu. Dans le cas de l'exemple choisi, le paquet P2, est décodé au moyen de la fonction FD de décodage identifiée, fonction qui en l'occurrence est la fonction de décodage FD2 associée à la passerelle GW2 puisque ID = ID2. Le paquet P1 est de ce fait restitué.

A l'étape 540, les données d'identification $ID_{N+1}$ qui ont été encapsulées dans le paquet P2 sont extraites suite à l'étape de décodage 530. Ces données correspondent dans l'exemple décrit aux données d'identification ID4 de la machine M4 émettrice du paquet P1.

A l'étape 545, les données d'identification $ID_{N+1}$ extraites à l'étape 540, sont comparées avec les données d'identification mémorisées dans la mémoire ID. Dans l'exemple décrit, les données d'identification ID = ID2 de la machine GW2 sont comparées avec les données d'identification $ID_{N+1}$ = ID4 de la machine M4. Dans l'exemple choisi, il n'y a pas égalité, et c'est donc l'étape 560 qui est exécutée suite à l'étape 545.

A l'étape 560, la plate-forme PF mémorise, dans une deuxième table TG dite table de gestion, en association avec les données d'identification $ID_{N+1}$ = ID4 obtenues à l'étape 540, les données d'identifications ID2 mémorisées dans la mémoire ID :

$$TG [ID_{N+1}] = ID$$

c'est-à-dire :

$$TG [ ID4 ] = ID2 .$$

La table de gestion ainsi renseignée, permet à la plate-forme PF de mémoriser le fait que la machine ID4 fait partie d'un réseau secondaire accessible via la passerelle GW2.

A l'étape 570, la plateforme PF enregistre en mémoire ID les données d'identification ID4 obtenues à l'étape 540 précédente:

$$ID = ID4 .$$

Suite à la mise à jour de la mémoire ID effectuée à l'étape 570, le procédé se poursuit à l'étape 520 avec le paquet P1, en remplacement du paquet P2, et comme données d'identification ID= ID4, en remplacement de ID2.

Dans l'exemple choisi, le déroulement de cette troisième itération s'effectue comme suit.

A l'étape 520, la plate-forme PF recherche un identifiant d'une fonction FD de décodage associée aux données d'identification mémorisées dans la mémoire ID:

$$FD = TFD [ ID ]$$

Dans le cas de l'exemple choisi, l'identifiant est nul, aucune fonction FD n'étant associée à la machine M4. C'est donc l'étape 550 qui est exécutée ensuite.

A l'étape 550, le message MG1, contenu dans le paquet P1 obtenu à l'étape 520, est extrait puis traité par la plate-forme PF selon le contenu de ce message.

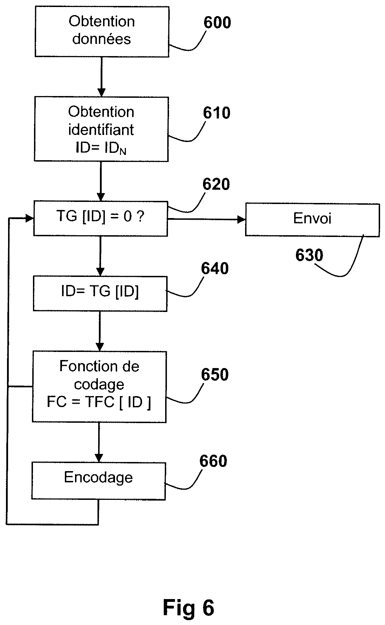

Le procédé selon l'invention, en ce qui concerne la partie émission de paquets, est décrit plus en détail au regard de la figure 6, dans le cas de la configuration de réseau de la figure 4 et en utilisant l'exemple de paquets de données illustré à la figure 7a.

Dans cet exemple, un paquet de données P est destiné à être émis par la plateforme PF à destination de la machine M4. Comme illustré à la figure 7a, le paquet après envoi, transite successivement à travers la passerelle GW1 puis à travers la passerelle GW2. Le paquet de donné P a des contenus différents P3, P2, P1 au cours de sa transmission de la plate-forme PF à la machine M4.

Avant envoi par la plate-forme PF du paquet P de contenu P3, le procédé illustré à la figure 6, comprenant les étapes 600 à 660, est exécuté par la plate-forme PF.

A l'étape 600, la plate-forme PF génère le contenu du message MG1 à envoyer.

A l'étape 610, la plate-forme PF obtient des données d'identification ID4 de la machine à laquelle le message MG1 est à envoyer. Les données d'identification ID4 sont mémorisées dans la mémoire ID:

$$ID = ID4 .$$

A l'étape 620, la plate-forme PF interroge la table de gestion TG pour identifier une passerelle via laquelle le paquet P1 doit transiter pour parvenir à la machine destinataire du paquet. Si la valeur TG[ID] mémorisée dans la table en association avec les données d'identifications mémorisées dans ID est nulle ou si aucune valeur n'est mémorisée, le procédé se poursuit à l'étape 630, sinon à l'étape 640. La valeur TG[ID] mémorisée dans la table TG pour ID = ID4 correspondant aux données d'identification ID2, c'est la passerelle GW2 qui est identifiée comme passerelle d'accès au réseau secondaire auquel appartient la machine M4. Dans l'exemple décrit, c'est donc l'étape 640 qui est exécutée.

A l'étape 640, la plate-forme PF mémorise dans ID l'identifiant de la passerelle via laquelle le paquet doit transiter pour parvenir à la machine destinataire du paquet :

$$ID = TG [ ID ] .$$

Dans l'exemple choisi, le nouvel identifiant mémorisé dans ID est égal à

$$ID = TG [ ID4 ] = ID2 .$$

A l'étape 650, la plate-forme PF recherche, dans une troisième table TFC dite table des fonctions de codage, un identifiant FC d'une fonction de codage associée à l'identifiant mémorisé dans la mémoire ID:

$$FC = TFC [ ID ]$$

Cet identifiant a été préalablement stocké en mémoire, en association avec les données d'identification ID, en l'occurrence les données d'identification ID2 de la passerelle GW2. Un tel identifiant est réalisé par exemple sous forme de pointeur vers une fonction logicielle de codage, pointeur au moyen duquel la fonction est aisément activable.

Si aucun identifiant de fonction de codage n'est trouvé ou que cet identifiant est un pointeur nul, cela signifie qu'aucune fonction de codage n'est à exécuter par la plate-forme PF. Ceci se produit dans le cas où la machine destinatrice du paquet est le destinataire final des données. Dans ce cas, l'étape 620 est exécutée suite à l'étape 650. Dans le cas contraire, l'étape 660 est exécutée suite à l'étape 650. Dans le cas de l'exemple décrit, c'est l'étape 660 qui est exécutée, la fonction de codage FC= FC2 étant obtenue par consultation de la table TFC à partir des données d'identification ID2 de la GW2.

A l'étape 660, lorsqu'une fonction de codage FC exécutable a été identifiée à l'étape 650, la plate-forme PF exécute la fonction de codage FC2 et l'applique au paquet P1 à transmettre, de manière à obtenir le paquet P2. L'étape 620 est exécutée suite à l'étape 660.

A l'étape 620, la plate-forme PF interroge la table de gestion TG pour identifier une passerelle via laquelle le paquet P2 doit transiter pour parvenir à la machine destinataire du paquet. La valeur TG[ID] mémorisée dans la table TG pour ID = ID2 correspondant aux données d'identification ID1, c'est la passerelle GW1 qui est identifiée comme passerelle d'accès au réseau secondaire auquel appartient la passerelle GW2.

A l'étape 640, la plate-forme PF mémorise dans ID l'identifiant de la passerelle via laquelle le paquet doit transiter pour parvenir à la machine destinataire du paquet :

$$ID = TG [ ID ] .$$

Dans l'exemple choisi, le nouvel identifiant mémorisé dans ID est égal à

$$ID = TG [ ID2 ] = ID1 .$$

A l'étape 650, la plate-forme PF recherche, dans la table TFC des fonctions de codage, un identifiant FC d'une fonction de codage associée à l'identifiant mémorisé dans la mémoire ID:

$$FC = TFC [ ID ]$$

Dans le cas de l'exemple décrit, la fonction de codage FC= FC1 est obtenue par consultation de la table TFC à partir des données d'identification ID= ID1 de la passerelle GW1. L'étape 660 est ensuite exécutée, la plate-forme PF exécutant la fonction de codage FC1 obtenue à l'étape 650 et l'appliquant au paquet P2 à transmettre, de manière à obtenir le paquet P3. L'étape 620 est exécutée suite à l'étape 660.

A l'étape 620, la plate-forme PF interroge à nouveau la table de gestion TG pour identifier une passerelle via laquelle le paquet P3 doit transiter pour parvenir à la machine destinataire du paquet. La valeur TG[ID] mémorisée dans la table TG pour ID = ID1 étant nulle, c'est la plate-forme PF qui est identifiée comme dispositif d'accès au réseau auquel appartient la passerelle GW1. La valeur obtenue à l'étape 620 étant nulle, c'est l'étape 630 qui est exécutée ensuite.

A l'étape 630 finale, le paquet encodé par la plateforme est envoyé, une opération de formatage des données de ce paquet étant si besoin appliquée au paquet avant envoi.

Le procédé selon l'invention, en ce qui concerne la partie réception de paquets, est décrit plus en détail dans le cas particulier du deuxième exemple de paquets de données illustré à la figure 7b.

Dans cet exemple, un paquet de données P est émis par la passerelle GW2 elle-même à destination de la plateforme PF. Le paquet de données P a ici encore des contenus différents P1, P2, P3 au cours de sa transmission de la passerelle GW2 à plate-forme PF.

Après génération par la passerelle GW2, le paquet P a un contenu P1 et comprend notamment un message MG1 destiné à la plateforme PF.

Après émission par la passerelle GW2 et à réception par la passerelle GW1, le paquet P a un contenu P2. Le paquet P2 comprend le message MG1 destiné à la plateforme plate-forme PF et optionnellement des données d'identification de la machine émettrice du paquet P, insérées par la passerelle GW2 avant envoi du paquet M2, c'est-à-dire des données d'identification ID2 de passerelle GW2 elle-même. En alternative, il peut être prévu que les données d'identification insérées par la passerelle lorsqu'elle est elle-même émettrice d'un paquet soient nulles.

Le paquet P2 est encodé à partir du paquet P1 par la passerelle GW2 comme si le paquet P1 avait été émis par l'une des machines M4 ou M5 du sous-réseau géré par la passerelle GW2, c'est-à-dire par application de la fonction FC2 de codage associée à la passerelle GW2.

Après émission par la passerelle GW1 et à réception par la plateforme PF, le paquet P a un contenu P3. Le paquet P3 comprend le message MG1 destiné à la plateforme plate-forme PF et des données d'identification ID2 de la machine GW2 émettrice du paquet P2, insérées par la passerelle GW1 lors du transit du paquet P. Le paquet P3 comprend optionnellement deux fois les données d'identification ID2 de la passerelle GW2.

Le traitement du paquet P dans ce deuxième exemple est identique à celui du premier exemple donné ci-dessus, à l'exception des quelques différences relevées ci-dessous.

Les étapes initiales 500 à 510 du procédé de communication se déroulent comme dans le cas du premier exemple de paquet.

La première itération du procédé (étapes 520 à 545) se déroule comme dans le cas du premier exemple de paquet, la plate-forme PF obtenant le paquet P2 à partir du paquet P3 reçu.

La deuxième itération du procédé (étapes 520 à 545) se déroule comme dans le cas du premier exemple de paquet, la plate-forme PF obtenant le paquet P1 à partir du paquet P2, à l'exception toutefois de l'étape 545 lors de laquelle les données d'identification $ID_{N+1}$ extraites à l'étape 540 précédente, sont comparées avec les données d'identification mémorisées dans la mémoire ID.

Dans l'exemple décrit ici, les données d'identification ID = ID2 de la machine GW2 sont comparées avec les données d'identification $ID_{N+1}$= ID2 de la machine GW2. Il y a égalité et c'est donc l'étape 550 qui est exécutée suite à l'étape 545. Il n'y a donc pas de fonction de décodage supplémentaire à rechercher puisque c'est la passerelle GW2 qui a généré le paquet P. En outre il n'est pas utile d'enregistrer dans la table de gestion TG les données d'identification ID2 en association avec les données d'identification ID2. Le procédé se termine donc suite à l'étape 550.

On comprend ainsi comment le test de l'étape 545 permet de détecter et de traiter les cas où une passerelle d'interconnexion émet pour son propre compte un paquet.

En ce qui concerne la partie émission de paquets, la situation dans laquelle la plateforme PF émet à destination de la passerelle d'interconnexion GW2 un paquet de données n'implique pas de modification des étapes 600 à 660 du procédé selon l'invention telles qu'elles ont été décrites dans le cas du premier exemple de paquet.

Selon une implémentation préférée, les différentes étapes du procédé selon l'invention sont mises en oeuvre par logiciel, logiciel comprenant des instructions logicielles destinées à être exécutées par un processeur de données de la plate-forme et conçues pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention est applicable à toute configuration de réseau, quel que soit le nombre de réseaux secondaires, quelle que soit la technologie d'adressage des machines utilisée dans ces réseaux secondaires et quel que soit le type de codage / décodage appliqué par les passerelles lors du transit d'un paquet. En particulier, même lorsqu'une passerelle est transparente et n'applique aucune fonction de codage / décodage à un paquet, hormis éventuellement l'insertion de données d'identification, il est prévu de mémoriser un pointeur non nul vers une fonction de codage / décodage qui ne modifie pas les données d'entrée qu'elle reçoit. De cette manière le procédé décrit reste générique et applicable dans tous les cas.

L'invention fournit une solution générique de communication entre machines. Elle suppose la mise en oeuvre au niveau de la plateforme de fonctions de codage et décodage correspondant chacune à une fonction de décodage, respectivement de codage mise en oeuvre par un dispositif de gestion d'un réseau secondaire via lequel les paquets transitent.

Etant donné que les dispositifs GW1, GW2 de gestion de réseaux secondaires sont eux-mêmes vus et identifiés par la plate-forme PF de la même manière qu'une machine M0 à M5, un tel dispositif GW1, GW2 est susceptible d'émettre des messages pour son propre compte et de communiquer avec la plate-forme PF selon le même procédé. Le procédé est donc complètement générique.

**Revendications**

1. Procédé de traitement d'au moins un paquet (P3) de données reçu par une entité réceptrice en provenance d'une machine (M4, GW2) après transmission à travers au moins un réseau de transmission de données, le procédé comprenant,

   - une étage (510) d'obtention de données d'identification d'un dispositif (GW1) intervenu dans la transmission dudit paquet de données,
   - une étage (520) d'identification d'une fonction (FD1) de décodage associée aux données d'identification obtenues, ladite fonction (FD1) de décodage étant une fonction inverse d'une fonction (FC1) de codage appliquée par ledit dispositif (GW1) à un paquet avant transmission,
- une étape (530) de décodage du paquet reçu par application de la fonction (FD1) de décodage identifiée;

le dispositif (GW1) intervenu dans la transmission étant disposé entre la machine (M4, GW2) et l'entité réceptrice.

2. Procédé selon la revendication 1, dans lequel l'étape de décodage est appliquée itérativement sur le paquet courant constitué par le paquet obtenu à l'issue de l'étape de décodage précédente, par application à chaque itération de la fonction de décodage associée aux données d'identification de chaque dispositif d'une succession de dispositifs intervenus dans la transmission dudit paquet de ladite machine à l'entité réceptrice,
l'ordre des dispositifs associés respectivement aux fonctions de décodage appliquées lors des étapes de décodage successives étant l'ordre inverse de l'ordre dans lequel ces dispositifs interviennent lors de la transmission dudit paquet de ladite machine à l'entité réceptrice.

3. Procédé selon la revendication 2, comprenant, lorsque ledit paquet a été transmis successivement par un premier dispositif (GW2) puis par un deuxième dispositif (GW1), une étape (560) de mémorisation, dans une table (TG) mémorisant en association avec des données d'identification d'une première machine des données d'identification d'une deuxième machine via laquelle est accessible un réseau secondaire dont fait partie la première machine, de données d'identification (ID1) du deuxième dispositif en association avec des données d'identification (ID2) du premier dispositif.

4. Procédé selon la revendication 1, 2 ou 3, dans lequel lesdites données d'identification sont extraites dudit paquet.

5. Procédé de traitement d'au moins un paquet de données à transmettre par une entité émettrice à destination d'une machine (M4, GW2) à travers un réseau de transmission de données, le procédé comprenant,

   - une étape (610) d'obtention de données d'identification d'un dispositif (GW1) destiné à intervenir dans la transmission du paquet à transmettre,
   - une étape (650) d'identification d'une fonction (FC2) de codage associée aux données d'identification obtenues, ladite fonction (FC2) de codage étant une fonction inverse d'une fonction (FD2) de décodage appliquée par ledit dispositif (GW2) à un paquet avant transmission,
- une étape (660) de codage dudit paquet par application de la fonction (FC2) de codage identifiée,
- une étape (630) d'envoi audit dispositif (GW1) du paquet obtenu à l'issue de l'étape de codage, en vue de la transmission dudit paquet à ladite machine;

le dispositif (GW1) intervenu dans la transmission étant disposé entre la machine (M4, GW2) et l'entité réceptrice.

6. Procédé selon la revendication 5, dans lequel l'étape de codage est appliquée itérativement sur le paquet courant constitué par le paquet obtenu à l'étape de codage précédente, par application à chaque itération de la fonction de codage associée aux données d'identification de chaque dispositif d'une succession de dispositifs destinés à intervenir dans la transmission dudit paquet de l'entité émettrice à ladite machine,
l'ordre des dispositifs respectivement associés aux fonctions de codage appliquées lors des étapes de codage successives étant l'ordre inverse de l'ordre dans lequel ces dispositifs interviennent lors de la transmission dudit paquet de l'entité émettrice à ladite machine.

7. Procédé selon la revendication 5 ou 6, dans lequel les données d'identification (ID2) dudit dispositif (GW2) sont obtenues à partir de données d'identification (ID4) de ladite machine (M4), par lecture dans une table mémorisant en association avec des données d'identification d'une première machine des données d'identification d'une deuxième machine via laquelle est accessible un réseau secondaire dont fait partie la première machine.

8. Procédé selon la revendication 7, comprenant, lorsque ledit paquet est destiné à être transmis successivement par un premier dispositif (GW1) puis par un deuxième dispositif (GW2), une étape (640) d'obtention de données d'identification (ID1) dudit premier dispositif (GW1) à partir de données mémorisées dans ladite table en association avec des données d'identification (ID2) dudit deuxième dispositif (GW2).

9. Dispositif de communication (PF) apte à recevoir au moins un paquet (P3) de données d'une machine (M4, GW2) après transmission à travers au moins un réseau de transmission de données, ledit dispositif comprenant,

   - des moyens d'obtention (510) de données d'identification d'un dispositif (GW1) intervenu dans la transmission dudit paquet de données,
- des moyens d'identification (520) d'une fonction (FD1) de décodage associée aux données d'identification obtenues, ladite fonction (FD1) de décodage étant une fonction inverse d'une fonction (FC1) de codage appliquée par ledit dispositif (GW1) à un paquet avant transmission,
- des moyens de décodage du paquet reçu par application de la fonction (FD1) de décodage identifiée; le dispositif (GW1) intervenu dans la transmission étant disposé entre la machine (M4, GW2) et l'entité réceptrice.

10. Dispositif de communication (PF) apte à transmettre au moins un paquet de données à destination d'une machine (M4, GW2) à travers un réseau de transmission de données, ledit dispositif comprenant,

- une étape d'obtention (610) de données d'identification d'un dispositif (GW1) destiné à intervenir dans la transmission du paquet à transmettre,
- des moyens d'identification (650) d'une fonction (FC2) de codage associée aux données d'identification obtenues, ladite fonction (FC2) de codage étant une fonction inverse d'une fonction (FD2) de décodage appliquée par ledit dispositif (GW2) à un paquet avant transmission,
- des moyens de codage (660) dudit paquet par application de la fonction (FC2) de codage identifiée,
- des moyens d'envoi (630) pour envoyer audit dispositif (GW2) le paquet obtenu à l'étape de codage, en vue de la transmission dudit paquet à ladite machine; le dispositif (GW1) intervenu dans la transmission étant disposé entre la machine (M4, GW2) et l'entité réceptrice.

11. Programme informatique comprenant des instructions de code de programme pour l'exécution des étapes du procédé selon l'une des revendications 1 à 8 lorsque ledit programme est exécuté par un processeur de données.

12. Support d'enregistrement lisible par un processeur de données sur lequel est enregistré un programme comprenant des instructions code de programme pour l'exécution des étapes du procédé selon l'une des revendications 1 à 8.

## Patentansprüche

1. Verfahren zur Verarbeitung mindestens eines Datenpakets (P3), das durch eine Empfangseinheit von einer Maschine (M4, GW2) nach der Übertragung durch mindestens ein Datenübertragungsnetz empfangen wird, wobei das Verfahren umfasst:

- eine Stufe (510) des Erhaltens von Identifikationsdaten einer Vorrichtung (GW1), die in die Übertragung des Datenpakets eingegriffen hat,
- eine Stufe (520) der Identifikation einer Decodierungsfunktion (FD1), die mit den erhaltenen Identifikationsdaten assoziiert ist, wobei die Decodierungsfunktion (FD1) eine inverse Funktion einer Codierungsfunktion (FC1) ist, die von der Vorrichtung (GW1) auf ein Paket vor der Übertragung angewendet wird,
- einen Schritt (530) der Decodierung des empfangenen Pakets durch Anwendung der identifizierten Decodierungsfunktion (FD1);

wobei die Vorrichtung (GW1), die in die Übertragung eingegriffen hat, zwischen der Maschine (M4, GW2) und der Empfangseinheit angeordnet ist.

2. Verfahren nach Anspruch 1, wobei der Schritt der Decodierung iterativ auf das aktuelle Paket angewendet wird, welches aus dem Paket besteht, das am Ende des vorhergehenden Decodierungsschritts erhalten wird, durch Anwenden, bei jeder Iteration der Decodierungsfunktion, welche mit den Identifikationsdaten jeder Vorrichtung einer Folge von Vorrichtungen assoziiert ist, die in die Übertragung des Pakets von der Maschine an die Empfangseinheit eingegriffen haben,
wobei die Reihenfolge der Vorrichtungen, welche jeweils mit den Decodierungsfunktionen assoziiert sind, die bei den aufeinanderfolgenden Schritten der Decodierung angewendet werden, die umgekehrte Reihenfolge der Reihenfolge ist, in der diese Vorrichtungen bei der Übertragung des Pakets von der Maschine an die Empfangseinrichtung eingreifen.

3. Verfahren nach Anspruch 2, umfassend, wenn das Paket aufeinanderfolgend von einer ersten Vorrichtung (GW2), dann von einer zweiten Vorrichtung (GW1) übertragen wurde, einen Schritt (560) des Speicherns in einer Tabelle (TG), die in Assoziation mit Identifikationsdaten einer ersten Maschine Identifikationsdaten einer zweiten Maschine speichert, über die auf ein Sekundärnetz zugegriffen werden kann, von dem die erste Maschine einen Teil bildet, von Identifikationsdaten (ID1) der zweiten Vorrichtung in Assoziation mit Identifikationsdaten (ID2) der ersten Vorrichtung.

4. Verfahren nach Anspruch 1, 2 oder 3, wobei die Identifikationsdaten aus dem Paket extrahiert werden.

5. Verfahren zur Verarbeitung mindestens eines Datenpakets, das von einer Sendeeinheit an das Ziel einer Maschine (M4, GW2) über ein Datenübertragungsnetz zu übertragen ist, wobei das Verfahren umfasst:

- einen Schritt (610) des Erhaltens von Identifikationsdaten einer Vorrichtung (GW1), die dazu bestimmt ist, in die Übertragung des zu übertragenden Pakets einzugreifen,

- einen Schritt (650) der Identifikation einer Codierungsfunktion (FC2), die mit den erhaltenen Identifikationsdaten assoziiert ist, wobei die Codierungsfunktion (FC2) eine inverse Funktion einer Decodierungsfunktion (FD2) ist, die von der Vorrichtung (GW2) auf ein Paket vor der Übertragung angewendet wird,

- einen Schritt (660) der Codierung des Pakets durch Anwendung der identifizierten Codierungsfunktion (FC2),

- einen Schritt (630) des Sendens, an die Vorrichtung (GW1), des Pakets, das am Ende des Codierungsschritts erhalten wird, zur Übertragung des Pakets an die Maschine;

wobei die Vorrichtung (GW1), die in die Übertragung eingegriffen hat, zwischen der Maschine (M4, GW2) und der Empfangseinheit angeordnet ist.

6. Verfahren nach Anspruch 5, wobei der Schritt der Codierung iterativ auf das aktuelle Paket angewendet wird, welches aus dem Paket besteht, das am Ende des vorhergehenden Codierungsschritts erhalten wird, durch Anwenden, bei jeder Iteration der Codierungsfunktion, welche mit den Identifikationsdaten jeder Vorrichtung einer Folge von Vorrichtungen assoziiert ist, die dazu bestimmt sind, in die Übertragung des Pakets von der Sendeeinheit an die Maschine einzugreifen,

wobei die Reihenfolge der Vorrichtungen, welche jeweils mit den Codierungsfunktionen assoziiert sind, die bei den aufeinanderfolgenden Schritten der Codierung angewendet werden, die umgekehrte Reihenfolge der Reihenfolge ist, in der diese Vorrichtungen bei der Übertragung des Pakets von der Sendeeinheit an die Maschine eingreifen.

7. Verfahren nach Anspruch 5 oder 6, wobei die Identifikationsdaten (ID2) der Vorrichtung (GW2) aus Identifikationsdaten (ID4) der Maschine (M4) erhalten werden, durch Lesen in einer Tabelle, die in Assoziation mit Identifikationsdaten einer ersten Maschine Identifikationsdaten einer zweiten Maschine speichert, über die auf ein Sekundärnetz zugegriffen werden kann, von dem die erste Maschine einen Teil bildet.

8. Verfahren nach Anspruch 7, umfassend, wenn das Paket dazu bestimmt ist, aufeinanderfolgend von einer ersten Vorrichtung (GW1), dann von einer zweiten Vorrichtung (GW2) übertragen zu werden, einen Schritt (640) des Erhaltens von Identifikationsdaten (ID1) der ersten Vorrichtung (GW1) aus Daten, die in der Tabelle in Assoziation mit Identifikationsdaten (ID2) der zweiten Vorrichtung (GW2) gespeichert werden.

9. Kommunikationsvorrichtung (PF), welche geeignet ist, mindestens ein Datenpaket (P3) von einer Maschine (M4, GW2) nach der Übertragung durch mindestens ein Datenübertragungsnetz zu empfangen, wobei die Vorrichtung umfasst:

- Mittel (510) zum Erhalten von Identifikationsdaten einer Vorrichtung (GW1), die in die Übertragung des Datenpakets eingegriffen hat,

- Mittel (520) zur Identifikation einer Decodierungsfunktion (FD1), die mit den erhaltenen Identifikationsdaten assoziiert ist, wobei die Decodierungsfunktion (FD1) eine inverse Funktion einer Codierungsfunktion (FC1) ist, die von der Vorrichtung (GW1) auf ein Paket vor der Übertragung angewendet wird,

- Mittel zur Decodierung des empfangenen Pakets durch Anwendung der identifizierten Decodierungsfunktion (FD1);

wobei die Vorrichtung (GW1), die in die Übertragung eingegriffen hat, zwischen der Maschine (M4, GW2) und der Empfangseinheit angeordnet ist.

10. Kommunikationsvorrichtung (PF), welche geeignet ist, mindestens ein Datenpaket an das Ziel einer Maschine (M4, GW2) durch ein Datenübertragungsnetz zu übertragen, wobei die Vorrichtung umfasst:

- einen Schritt (610) des Erhaltens von Identifikationsdaten einer Vorrichtung (GW1), die dazu bestimmt ist, in die Übertragung des zu übertragenden Pakets einzugreifen,

- Mittel (650) zur Identifikation einer Codierungsfunktion (FC2), die mit den erhaltenen Identifikationsdaten assoziiert ist, wobei die Codierungsfunktion (FC2) eine inverse Funktion einer Decodierungsfunktion (FD2) ist, die von der Vorrichtung (GW2) auf ein Paket vor der Übertragung angewendet wird,

- Mittel (660) zur Codierung des Pakets durch Anwendung der identifizierten Codierungsfunktion (FC2),

- Mittel (630) zum Senden, an die Vorrichtung (GW2), des Pakets, das in dem Codierungsschritt erhalten wird, zur Übertragung des Pakets an die Maschine;

wobei die Vorrichtung (GW1), die in die Übertragung eingegriffen hat, zwischen der Maschine (M4, GW2) und der Empfangseinheit angeordnet ist.

11. Computerprogramm, umfassend Programmcodeinstruktionen zur Ausführung der Schritte des Verfahrens nach einem der Ansprüche 1 bis 8, wenn das Programm von einem Datenprozessor ausgeführt wird.

12. Speichermedium, welches von einem Datenprozessor gelesen werden kann, und auf welchem ein Programm gespeichert ist, umfassend Programmcodeinstruktionen zur Ausführung der Schritte des Verfahrens nach einem der Ansprüche 1 bis 8.

**Claims**

1. A method for processing at least one data packet (P3) received by a receiving entity from a machine (M4, GW2) after transmission via at least one data transmission network, said method comprising:

   - obtaining (510) identification data of a device (GW1) involved in the transmission of said data packet,
   - identification (520) of a decoding function (FD1) associated with said obtained identification data, said decoding function (FD1) being an inverse function of an encoding function (FC1) applied by said device (GW1) to a packet before transmission,
   - decoding (530) the receive packet through the application of said identified decoding function (FD1);

   the device (GW1) involved in the transmission being disposed between the machine (M4, GW2) and the receiving entity.

2. The method as claimed in claim 1, in which the decoding step is applied iteratively to the current packet which comprises the packet obtained as a result of the preceding decoding step, through the application on each iteration of the decoding function associated with identification data of each device of a succession of devices which are involved in the transmission of said packet from said machine to the receiving entity, wherein the order of the devices respectively associated with the decoding functions applied during the successive decoding steps is the reverse order of the order in which the devices are involved during the transmission of said packet from said machine to the receiving entity.

3. The method as claimed in claim 2, comprising, if said packet has been transmitted successively by a first device (GW2), then by a second device (GW1), a storage step (560) to store, in a table (TG) recording in association with identification data of a first machine identification data of a second machine via which a secondary network to which the first machine belongs is accessible, identification data (ID1) of the second device in association with identification data (ID2) of the first device.

4. The method as claimed in one of claims 1, 2 or 3, wherein said identification data are extracted from said packet.

5. A method for processing at least one data packet to be transmitted by a transmitting entity to a machine (M4, GW2) via a data transmission network, said method comprising:

   - obtaining (610) identification data of a device (GW1) to be involved in the transmission of said to be transmitted packet,
   - identification (650) of an encoding function (FC2) associated with said obtained identification data, said encoding function (FC2) being an inverse function of a decoding function (FD2) applied by said device (GW2) to a packet before transmission,
   - encoding (660) of said packet through the application of said identified encoding function (FC2),
   - sending (630) to said device (GW1) of the packet obtained as a result of the encoding step, for the purpose of transmitting said packet to said machine;

   the device (GW1) involved in the transmission being disposed between the machine (M4, GW2) and the receiving entity.

6. The method as claimed in claim 5, in which the encoding step is applied iteratively to the current packet which comprises the packet obtained as a result of the preceding encoding step, through the application on each iteration of the encoding function associated with identification data of each device of a succession of devices which are intended to be involved in the transmission of said packet from the transmitting entity to said machine, wherein the order of the devices respectively associated with the encoding functions applied during the successive encoding steps being in the inverse order of the order in which the devices are involved during the transmission of said packet from the transmitting entity to said machine.

7. The method as claimed in claim 5 or 6, wherein said identification data (ID2) of said device (GW2) are obtained from identification data (ID4) of said machine (M4) by reading in a table recording in association with identification data of a first machine identification data of a second machine via which a secondary network to which the first machine belongs is accessible.

**8.** The method as claimed in claim 7, comprising, if said packet is intended to be transmitted successively by a first device (GW1) then by a second device (GW2), obtaining (640) identification data (ID1) of said first device (GW1) from data stored in said table in association with identification data (ID2) of said second device (GW2).

**9.** A communications device (PF) suitable for receiving at least one data packet (P3) originating from a machine (M4, GW2) after transmission via at least one data transmission network, said device comprising:

> - means for obtaining (510) identification data of a device (GW1) involved in the transmission of said data packet,
> - means for identifying (520) a decoding function (FD1) associated with said obtained identification data, said decoding function (FD1) being an inverse function of an encoding function (FC1) applied by said device (GW1) to a packet before transmission,
> - means for decoding the received packet through application of said identified decoding function (FD1); the device (GW1) involved in the transmission being disposed between the machine (M4, GW2) and the receiving entity.

**10.** A communications device (PF) suitable for transmitting at least one data packet to a machine (M4, GW2) via a data transmission network, said device comprising:

> - obtaining (610) identification data of a device (GW1) to be involved in the transmission of said data packet,
> - means for identifying (650) an encoding function (FC2) associated with said obtained identification data, said encoding function (FC2) being an inverse function of a decoding function (FD2) applied by said device (GW2) to a packet before transmission,
> - means for encoding (660) said packet through the application of said identified encoding function (FC2),
> - sending (630) means for sending the packet obtained in the encoding step to said device (GW2), for the purpose of transmitting said packet to said machine; the device (GW1) involved in the transmission being disposed between the machine (M4, GW2) and the receiving entity.

**11.** Computer program comprising program code instructions for implementing the steps of the method as defined in one of claims 1 to 8 when said program is implemented by a data processor.

**12.** Data processor readable recording medium on which a program comprising program code instructions for implementing the steps of the method defined in one of claims 1 to 8 is recorded.

Fig. 1

Fig. 2

Fig. 3

Fig. 4

```
           ┌─────────────────┐
           │    Réception    │────  500
           └─────────────────┘
                    │
                    ▼
           ┌─────────────────┐
           │    Obtention    │
           │    identifiant  │────  510
           │    ID = ID_N    │
           └─────────────────┘
                    │
                    ▼
           ┌─────────────────┐
           │  Fonction de    │────  520
           │  décodage       │──────────────────┐
           │  FD = TFD [ ID ]│                   │
           └─────────────────┘                   │
                    │                            │
                    ▼                            │
           ┌─────────────────┐                   │
           │    Décodage     │────  530          │
           └─────────────────┘                   │
                    │                            │
                    ▼                            │
           ┌─────────────────┐                   │
           │    Obtention    │                   │
           │    identifiant  │────  540          │
           │    ID_{N+1}     │                   │
           └─────────────────┘                   │
                    │                            │
                    ▼                            ▼
           ┌─────────────────┐    545   ┌──────────────┐
           │  ID = ID_{N+1} ?│─────────▶│  Traitement  │
           └─────────────────┘          └──────────────┘
                    │                        550
                    ▼
           ┌─────────────────┐
           │  TG [ID_{N+1}] = ID │────  560
           └─────────────────┘
                    │
                    ▼
           ┌─────────────────┐
           │  ID = ID_{N+1}  │────  570
           └─────────────────┘
```

**Fig 5**

Obtention
données | **600**

Obtention
identifiant
ID= $ID_N$ | **610**

TG [ID] = 0 ? | **620**

Envoi

**630**

ID= TG [ID] | **640**

Fonction de
codage
FC = TFC [ ID ] | **650**

Encodage | **660**

# Fig 6

**Fig 7a**

**Fig 7b**

**EP 1 998 514 B1**

## RÉFÉRENCES CITÉES DANS LA DESCRIPTION

**Documents brevets cités dans la description**

- US 7215667 B

- US 6741585 B